(19) Europäisches Patentamt
European Patent Office
Office européen des brevets

(11) EP 0 750 137 A2

(12) **EUROPÄISCHE PATENTANMELDUNG**

(43) Veröffentlichungstag:
**27.12.1996 Patentblatt 1996/52**

(51) Int. Cl.[6]: **F16H 47/04**

(21) Anmeldenummer: **96109646.8**

(22) Anmeldetag: **15.06.1996**

(84) Benannte Vertragsstaaten:
**DE FR GB IT SE**

(30) Priorität: **23.06.1995 DE 19522385**

(71) Anmelder: **Voith Turbo GmbH**
**89522 Heidenheim (DE)**

(72) Erfinder:
- **Lamke, Martin**
  **70569 Stuttgart (DE)**
- **Körner, Tillmann, Dr.**
  **89551 Zang (DE)**

(74) Vertreter: **Weitzel, Wolfgang, Dr.-Ing.**
**Patentanwalt**
**Friedenstrasse 10**
**89522 Heidenheim (DE)**

(54) **Verfahren zur Auslegung eines stufenlosen hydrostatisch-mechanischen Leistungsverzweigungsgetriebes**

(57) Die Erfindung betrifft ein Verfahren zur Auslegung eines Leistungsverzweigungsgetriebes, insbesondere eines stufenlosen hydrostatisch-mechanischen Leistungsverzweigungsgetriebes mit wenigstens zwei Fahrbereichen, umfassend

- einen ersten mechanischen Getriebeteil, der wenigstens ein vierwelliges Planetenradgetriebe, welches zwei miteinander gekoppelte dreiwellige Planetenradsätze umfaßt;
- einen zweiten, hydrostatischen Getriebeteil, der zwei energetisch miteinander gekoppelte, als Pumpe oder Motor betreibbare Hydroeinheiten umfaßt, die mit dem mechanischen Teil gekoppelt sind.

Die Erfindung ist gekennzeichnet durch folgende Merkmale: bei welchem als wesentliches Kriterium die Lage wenigstens einer vorhandenen Nullstellen der Kennlinie "hydraulisch übertragbare Leistung im Verhältnis zur Gesamtleistung / Getriebegesamtübersetzung $i_F$" angesehen wird;
bei welchem durch Vorgabe der geeigneten Nullstellen die Standgetriebeübersetzungen der einzelnen Planetenradsätze ermittelt werden.

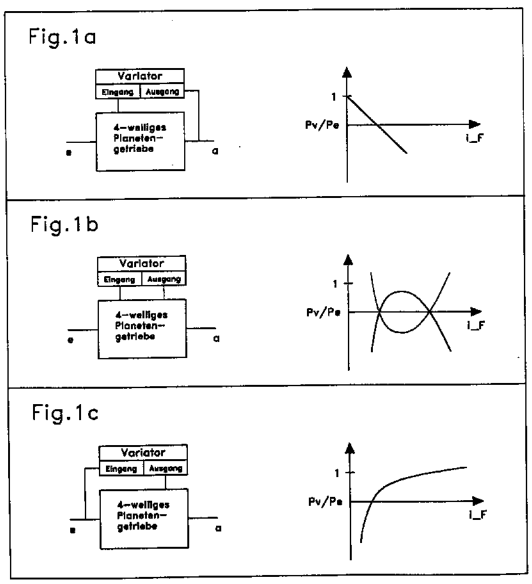


EP 0 750 137 A2

## Beschreibung

Die Erfindung betrifft ein Verfahren zur Auslegung eines stufenlosen hydrostatisch-mechanischen Leistungsverzweigungsgetriebes, im einzelnen mit den Merkmalen aus dem Oberbegriff des Anspruchs 1.

Stufenlose hydrostatisch-mechanische Leistungsverzweigungsgetriebe sind in verschiedenen Ausführungen bekannt, beispielsweise aus der DE 29 04 572. Vorzugsweise werden hydrostatisch-mechanische Leistungsverzweigungsgetriebe für drei Fahrbereiche eingesetzt, da man bestrebt ist, den Anteil der hydrostatisch übertragenen Leistung im Getriebe möglichst gering zu halten. Die Auslegung des Getriebes erfolgt dabei in Abhängigkeit der zu übertragenden Leistung sowie der Umwandlung von Drehzahl und Drehmoment und dem zur Verfügung stehenden Bauraum. Eine Auslegung dahingehend ist oft sehr problematisch. Zusätzlich steht auch das Erfordernis einer Kraftstoffreduzierung aufgrund erhöhter Anforderungen von seiten des Umweltschutzes.

Der Erfindung liegt die Aufgabe zugrunde, ein Verfahren zur Auslegung eines stufenlosen hydrostatisch-mechanischen Leistungsverzweigungsgetriebes zu entwickeln, bei welchem die bereits genannten Aspekte Berücksichtigung finden.

Die erfindungsgemäße Lösung der Aufgabe ist durch die kennzeichnenden Merkmale des Anspruchs 1 erfüllt. Vorteilhafte Ausgestaltungen sind in den Unteransprüchen wiedergegeben.

Die Erfinder haben erkannt, daß es im Hinblick auf den Kraftstoffverbrauch bei einem stufenlosen hydrostatischmechanischen Leistungsverzweigungsgetriebes auf die Lage der Nullstellen der Leistungsanteilskurve der hydrostatisch übertragbaren Leistung an der Gesamtleistung in Abhängigkeit von der Gesamtgetriebeübersetzung ankommt. Wesentlich dabei ist, je geringer die erste Nullstelle gewählt wird, desto geringer ist der Kraftstoffverbrauch bei realen Wegstrecken. Dies kann dadurch erklärt werden, daß der erste Fahrbereich mit seinem Anfahrvorgang einen entscheidenden Einfluß auf den absoluten Kraftstoffverbrauch im realen Betrieb hat. Durch eine Verkürzung des ersten Fahrbereichs steigt die Zugkraft und das Beschleunigungsvermögens des Fahrzeuges bei gleicher Motorleistung an, was zu einer beträchtlichen Kraftstoffeinsparung führt. Die zweite Nullstelle ist erfindungsgemäß dementsprechend so zu wählen, daß diese im letzten Drittel der Gesamtgetriebeübersetzung liegt. Wird die zweite Nullstelle im allgemeinen zu niedrig gewählt, steigt der Kraftstoffverbrauch durch eine höhere Leistungsteilung im dritten Fahrbereich an. Wird jedoch die Nullstelle wiederum zu hoch gewählt, steigt die Leistungsteilung im zweiten Fahrbereich, und der dritte Fahrbereich wird kaum benutzt, obwohl dessen Leistungsteilung mit steigender zweiter Nullstelle sinkt. Vorzugsweise werden deshalb Getriebe mit einer ersten Nullstelle im Bereich von < 0,3 bis 0,4 und mit einer zweiten Nullstelle im Bereich von etwa 0,9 bis 1,2 gewählt. Ausgehend davon besteht die Möglichkeit, mit Hilfe der Nullstellen die Getriebestandübersetzung zu ermitteln. Die Lage der beiden Nullstellen der Leistungsteilungskurve Pv/Pe ist dabei nur von der Kopplungsart und der Größe der beiden Standgetriebeübersetzungen $i_{o1}$ und $i_{o2}$ abhängig. Die sich ergebenden Standgetriebeübersetzungen sind jedoch wiederum von der Ankopplung des Hydrostaten an das Planetenradgetriebe abhängig.

Im allgemeinen sind wenigstens drei Anordnungen eines Variators in Verbindung mit einem Planetenradgetriebe denkbar. Bei dem nachfolgend betrachteten Planetenradgetriebe handelt es sich um ein vierwelliges Planetenradgetriebe, d.h. eine Kopplung von zwei dreiwelligen Planetenradgetrieben.

Bei der erstmöglichen Anordnung U wird der in Form eines hydrostatischen Getriebes ausgeführte Variator an die beiden gekoppelten Wellen angeschlossen. Bei der zweiten Variante, der Variante V, erfolgt dagegen die Ankopplung des hydrostatischen Getriebes an die freien Wellen der Planetenradsätze. Die dritte mögliche Anordnung W stellt eine Mischung aus den vorher genannten beiden Möglichkeiten dar.

Für die Kopplung von zwei Planetenradsätzen, d.h. von zwei dreiwelligen Planetengetrieben, stehen wiederum neun Möglichkeiten zur Verfügung. Es spielt dabei keine Rolle, ob die einzelnen Planetensätze eine positive oder negative Standgetriebeübersetzung $i_o$ besitzen. Die aufgeführten neun Grundkopplungen, welche durch zyklisches Vertauschen der einzelnen Wellen erreicht werden, ergeben durch Umkehrung der Standgetriebeübersetzung jeweils drei weitere Unterarten. Insgesamt entstehen auf diese Weise 9 x 4 = 36 Kopplungsmöglichkeiten von zwei Planetengetrieben zu einem vierwelligen Koppelgetriebe. Weitere Getriebetypen entstehen durch Kombination der drei Grundanordnungen U, V und W mit den 36 Kopplungsmöglichkeiten. Zusätzlich erhält man weitere 36 Getriebetypen durch Vertauschen des Einganges e und des Ausgangs a bei den W-Getriebetypen. Bei den anderen Getriebetypen U und V ist diese Umkehrung aus Symmetriegründen bereits enthalten. Mit Hilfe der Streckentheorie werden für alle Getriebetypen die Standgetriebeübersetzungen $i_{o1}$ und $i_{o2}$ in Abhängigkeit von den Nullstellen $i_{n1}$ und $i_{n2}$ erstellt. Bei der Vorgabe der gewünschten Nullstellen und der Begrenzung des dafür günstigen Bereiches kann somit für alle Kopplungen die Standgetriebeübersetzungen ermittelt werden.

Dieses Verfahren bietet den Vorteil, die Nullstellen gezielt aus dem verbrauchsgünstigen Bereich herauszusuchen und damit eine den Anforderungen entsprechende Standübersetzung des Getriebes zu erzielen, hinsichtlich der die Größenverhältnisse der einzelnen Aggregate abgestimmt werden. Es besteht somit die Möglichkeit, immer verbrauchsgünstige bzw. verbrauchsoptimierte stufenlose hydrostatisch-mechanische Leistungsverzweigungsgetriebe zu entwickeln.

Die erfindungsgemäße Lösung ist nachfolgend anhand von Figuren erläutert. Es zeigen:

| | |
|---|---|
| Fig. 1a bis 1c | prinzipielle Möglichkeiten zur Ankopplung eines Variators an ein Planetenradgetriebe; |
| Fig. 2 | verschiedene Grundanordnungen von Variator und Planetenradgetriebe; |
| Fig. 3a bis 3b | Varianten und Untervarianten der Kopplung zweier dreiwelliger Planetenradgetriebe; |
| Fig. 4a und 4b | Streckentheorie; |
| Fig. 5 | Herleitung der Standgetriebeübersetzung am Beispiel des Getriebetyps UA; |
| Fig. 6-9 | eine tabellarische Übersicht über die durch Kombination der drei Grundanordnungen U, V, W mit den 36 Kopplungsmöglichkeiten entstehenden Getriebetypen mit zugehöriger, hergeleiteter Standgetriebeübersetzungsgleichung; |
| Fig. 10 | dreidimensional erstellte Diagramme Kraftstoffverbrauch in Abhängigkeit der Lage der Nullstellen. |

Die Figur 1 verdeutlicht prinzipielle Möglichkeiten der Ankopplung eines Variators, welcher sowohl mechanischer Art (Kettenwandler), elektrischer (Generator, Motor) als auch hydraulischer Art (Hydrostaten, Wandler) sein kann. Bei Verwendung eines hydrostatischen Getriebes sind mindestens zwei Hydrostaten erforderlich. Einer arbeitet jeweils als Motor, während der andere als Pumpe betrieben wird. Je nach Schaltung der Variatoren im Planetengetriebe ergeben sich die in den Figuren 1a bis 1c charakteristischen Leistungsteilungskurven. Da die Hydrostaten im Normalbetrieb im allgemeinen einen deutlich geringeren Wirkungsgrad als Zahnradgetriebe aufweisen, ist man bestrebt, die hydrostatischen Leistungsanteile im Getriebe gering zu halten. Dies läßt sich allgemein dadurch realisieren, daß über den Getriebeübersetzungsbereich mehrere verschiedenen Kopplungen nacheinander geschaltet werden. Dadurch ergeben sich mehrere Fahrbereiche. Die Umschaltung zwischen den einzelnen Fahrbereichen kann dabei bei unbelasteten Hydrostaten erfolgen, d.h. wenn die Leistungsteilungskurve eine Nullstelle besitzt. Für die Hydrostaten besteht die Möglichkeit des Wechsels ihrer Funktion von Motor zu Pumpe und umgekehrt zwischen den Fahrbereichen.

Bei der in der Figur 1a dargestellten Kopplungsmöglichkeit ist die Getriebeeingangswelle mit dem vierwelligen Planetenradgetriebe verbunden, wobei ein Element des Planetengetriebes mit dem Eingang des Variators gekoppelt ist. Die Leistungsteilung erfolgt somit erst über das Planetengetriebe. Der Zusammenfluß der Leistung erfolgt über den Ausgang des Variators und dem vierwelligen Planetengetriebe an der Abtriebswelle des Getriebes. Diese Kopplungsart eignet sich besonders gut zum Anfahren, da hier keine Anfahrkupplung erforderlich ist. Das Umschalten in einen weiteren Fahrbereich ist möglich. Das Verhältnis der Variatorleistung Pv zur Gesamtleistung Pe ist im nebengeordneten Diagramm dargestellt. Dieses Verhältnis ist über der momentanen Getriebeübersetzung $i_F$ aufgetragen.

Bei der in der Figur 1b dargestellten Kopplungsart erfolgt die Leistungsaufteilung über das vierwellige Planetengetriebe an den Variator und der Zusammenfluß erfolgt des weiteren analog vom Ausgang des Variators im vierwelligen Planetengetriebe, so daß die Gesamtleistung an der Abtriebswelle direkt vom vierwelligen Planetengetriebe abnehmbar ist. Das aufgetragene Verhältnis der mit dem Variator übertragenen Leistung Pv zur Getriebegesamtleistung Pe über die Getriebeübersetzung enthält dabei zwei Nullstellen. Dies ermöglicht es, diese Kopplungsart mehrfach hintereinandergeschaltet bzw. als mittleren Fahrbereich zu nutzen. An den beiden Nullstellen ist dabei der lastfreie Anschluß der Hydrostaten an einen vor- und einen nachgelagerten Fahrbereich möglich. Zum Anfahren ist jedoch eine Anfahrkupplung erforderlich.

Die in der Figur 1c dargestellte Kupplungsart ermöglicht die Leistungsteilung bereits vor dem Eingang des Planetengetriebes, d.h. die Getriebeeingangsleistung wird auf Variator und vierwelliges Planetengetriebe aufgeteilt. Der Zusammenfluß erfolgt dann innerhalb des vierwelligen Planetengetriebes, so daß am Getriebeausgang a die Gesamtleistung vom vierwelligen Planetengetriebe anliegt.

Im nebengeordneten Diagramm ist auch hier der Anteil der mit dem Variator übertragenen Leistung Pv im Verhältnis zur Gesamtgetriebeleistung Pe über der Übersetzung $i_F$ aufgetragen. Daraus wird ersichtlich, daß nur eine Nullstelle in der Leistungsteilung vorhanden ist. Diese Kopplungsart läßt sich somit nur als erster oder letzter Fahrbereich nutzen. Zum Anfahrvorgang ist jedoch eine Anfahrkupplung erforderlich.

Bei dem in Figur 1b dargestellten stufenlosen Getriebe, umfassend ein vierwelliges Planetengetriebe zur Leistungsverzweigung, besitzt die Leistungsteilungskurve Pv/Pe zwei Nullstellen. Diese sind hier als $i_{n1}$ und $i_{n2}$ bezeichnet. Die Lage der Nullstellen ist dabei nur von der Kopplungsart und der Größe der beiden Standgetriebeübersetzungen $i_{o1}$ und $i_{o2}$ abhängig.

Für eine Leistungsverzweigung nach dem Schema der Figur 1b ergeben sich bei einem vierwelligen Planetengetriebe eine Reihe von Kopplungsmöglichkeiten der Hydrostaten an die einzelnen Elemente des viervelligen Planetengetriebes. Zur Erstellung aller Kopplungsmöglichkeiten und deren Überprüfung kann beispielsweise der im nachfolgenden beschriebene Balken verwendet werden. Dieser entsteht aus einer Abwandlung des bekannten Kutzbach'schen Drehzahlplanes und bildet die geometrischen Verhältnisse (gekoppelte und freie Wellen sowie die Standgetriebeübersetzungen) des Planetenkoppelgetriebes ab. Mit Hilfe von parametrisierten Strecken (Streckentheorie genannt; zur Erläuterung siehe Fig. 4) lassen sich dann anhand des Balkens die Drehzahlen, Momente und Leistungen jeder Welle des Koppelgetriebes errechnen.

Die Figur 2 verdeutlicht drei verschiedene Grundanordnungen von Variator und Planetenradgetriebe. Bei dem Planetenradgetriebe handelt es sich um ein vierwelliges Planetengetriebe, welches aus zwei gekoppelten einfachen dreiwelligen Planetengetrieben besteht. Die Gesamtgetriebe U, V oder W umfassen dabei jeweils wenigstens einen Variator Var, welcher hier in Form eines hydrostatischen Getriebes, umfassend jeweils zwei sowohl als Pumpe als auch als Motor betreibbare Hydroeinheiten, und ein viervelliges Planetengetriebe P, des weiteren einen Getriebeeingang e, der wenigstens mittelbar mit dem Antrieb gekoppelt ist und einen Getriebeausgang a, welcher wenigstens mittelbar mit dem Abtrieb in Verbindung steht. Das jeweilige Planetenradgetriebe umfaßt des weiteren zwei Planetensätze, einen ersten Planetensatz PS1 und einen zweiten Planetensatz PS2.

Bei der Anordnung U wird der Variator Var an die beiden gekoppelten Wellen der beiden dreiwelligen Planetengetriebe angeschlossen.

Bei der Anordnung V erfolgt dagegen die Ankopplung des Variators an die freien Wellen der Planetensätze. Demgegenüber stellt die Anordnung W ein Gemisch aus den vorhergehenden beiden Möglichkeiten dar.

Die möglichen Grundkopplungen von zwei dreiwelligen Planetenradgetrieben sind nachfolgend in der Figur 3a dargestellt. Dabei spielt es keine Rolle, ob die einzelnen Planetensätze eine positive oder negative Standgetriebeübersetzung $i_o$ besitzen. Die aufgeführten neun Grundkopplungen a-i, welche durch zyklisches Vertauschen der Wellen erreicht werden, ergeben durch Umkehrung der Standgetriebeübersetzung jeweils drei weitere Unterarten. Diese Unterarten sind in der Figur 3b dargestellt. Insgesamt entstehen auf diese Weise 9 x 4, d.h. 36 Kopplungsmöglichkeiten von zwei Planetengetrieben zu einem vierwelligen Koppelgetriebe.

Die in dieser Anmeldung beschriebenen 38 Getriebetypen entstehen somit durch Kombination der drei Grundanordnungen U, V und W mit den 36 Koppelmöglichkeiten. Es ergibt sich somit die Anzahl von 36 x 3 = 108 Getriebetypen. Weitere 36 Typen erhält man durch das Vertauschen des Eingangs e und des Ausgangs a bei den W-Getriebetypen. Diese werden im nachfolgenden durch die Numerierung Getriebetyp-Nr. 2 bezeichnet.

Bei den Getriebetypen U und V ist diese Umkehrung aus Symmetriegründen bereits enthalten. Mit Hilfe der aus den Balken entstandenen Streckentheorie werden nachfolgend für alle Getriebetypen die Standgetriebeübersetzungen $i_{o1}$ und $i_{o2}$, in Abhängigkeit der Nullstellen $i_{n1}$ und $i_{n2}$, erstellt. Bei der Vorgabe der gewünschten Nullstellen kann somit für alle Kopplungen die Standgetriebeübersetzung bestimmt werden.

Als Summe entstehen somit 144 Getriebetypen; eine Übersicht ist den Figuren 6 bis 9 entnehmbar. Diese werden durch eine Abhängigkeitsuntersuchung auf 38 reduziert. Das bedeutet, daß die restlichen Getriebe sich durch die Vertauschung der Wellen Z2 und Z1 ergeben, die zugehörige Standgetriebeübersetzung des betreffenden Planetensatzes wird dadurch umgekehrt. Diese 144 Getriebetypen gelten für die Kopplungen jedes Variatortyps mit einem vierwelligen Planetenradgetriebe.

Die Figur 4 dient der Erläuterung der sogenannten Streckentheorie. Diese basiert auf dem sogenannten Helferbalken, welcher identisch mit der Drehzahlgeraden im Kutzbach'schen Drehzahlplan ist. Bezüglich der Herleitung des Kutzbach'schen Drehzahlplanes wird auf den Lehrbrief für das Hochschulfernstudium Getriebetechnik I Nr. 02 1149 01 2 verwiesen.

Bei der Streckentheorie ist das Verhältnis der einzelnen Strecken am Helferbalken, wie beispielsweise in Fig. 4a dargestellt, entscheidend. Die entsprechenden Daten bedeuten dabei:

- e - Eingang, Antrieb (Verbrennungsmotor)
- a - Ausgang, Abtrieb (zum Achsantrieb)
- P - Pumpe (angeschlossener Hydrostat arbeitet als Pumpe)
- M - Motor (angeschlossener Hydrostat arbeitet als Motor)
- s - nicht näher definiertes freies Wellenende (Stützstelle).

Das diese Wellen jeweils einem bestimmten Punkt am Helferbalken entsprechen, werden sie in Verbindung mit dem Balken jeweils als Balkenpunkt bezeichnet. Um unabhängig vom Kutzbach'schen Drehzahlplan Berechnungen anstellen zu können, werden in Anlehnungen an Voith-interne Unterlagen Strecken am Balken eingeführt. Diese stellen jeweils den Abstand zweier Balkenpunkte voneinander dar und dienen zur Errechnung des Drehzahl-, Drehmoment- und Leistungsverhaltens am Balken. Alle Strecken werden mit x und einem Anfangs- und Endindex bezeichnet. Dabei werden für die weiteren Berechnungen, jeweils vom Eingang e ausgehend, folgende Strecken verwendet:

- $x_{ea}$ Strecke für Ein- und Ausgang
- $x_{es1}$ Strecke zwischen Eingang und Stützstelle 1
- $x_{es2}$ Strecke zwischen Eingang und Stützstelle 2
- $x_{em}$ Strecke zwischen Eingang und Motor
- $x_{ep}$ Strecke zwischen Eingang und Pumpe

Wählt man für die Strecken konkrete Werte, so ist dadurch bereits ein abstraktes Getriebe festgelegt. Dieses abstrakte Getriebe muß nicht mit dem Getriebe aus dem Kutzbach'schen Drehzahlplan übereinstimmen. Jeweils drei Balkenpunkte lassen sich zu einem Planetenradsatz zusammenfassen, wobei jedem der drei Balkenpunkte eines der Planetengetriebeglieder, Zentralrad 1 und Zentralrad 2, entspricht. Die Standgetriebeübersetzung jedes Planetenradsatzes läßt sich anhand der Streckenverhältnisse am Balken bestimmen. Bei einem Balken mit vier Balkenpunkten und zwei gekoppelten Planetensätzen müssen jeweils zwei Balkenpunkte der beiden Planetensätze übereinstimmen. Diese beiden Balkenpunkte entsprechen dann den Kopplungen der beiden Planetenradsätze.

Nach Helfer kann einem jeden beliebigen Balkenpunkt die Drehzahl senkrecht aufgetragen werden, wie beispielsweise in der Figur 4b. Positive Drehzahlen weisen nach oben, negative nach unten. Das Drehzahlverhalten wird dabei durch eine Gerade dargestellt, die sämtliche Drehzahlpfeile miteinander verbindet. Dadurch ist eine schnelle Bestimmung des Drehzahlverhaltens des Getriebes an jedem Balkenpunkt, d.h. an jeder beliebigen Welle des Getriebes, möglich.

Die Gleichung für die momentane Getriebeübersetzung lautet hier $i_F = n_a / n_e$. Steigt die Getriebeübersetzung dabei an, nimmt die Steigung der Drehzahlgeraden ab. Bei konstanter Eingangsdrehzahl dreht sie sich z.B. im Uhrzeigersinn um die Spitze des Pfeiles $n_e$. Sind zwei Drehzahlen am Getriebe bekannt, lassen sich die Drehzahlen jeder anderen Welle des Getriebes aus den geometrischen Verhältnissen der Drehzahlgeraden ablesen bzw. berechnen.

Die Figur 5 erläutert die Herleitung der Standgetriebeübersetzungsformel anhand eines Getriebetyps UA. Aus dem Getriebeschema ist die Art der Kopplung sowie die Lage von Eingang e und Ausgang a und somit auch der Stützstellen s1 und s2 (Anschlüsse an den Variator Var) bekannt.

Es werden nun zwei Drei-Punkt-Balken, jeweils einen Planetensatz repräsentierend, mit den gekoppelten Wellen untereinander gezeichnet. Als Resultat entsteht der Vier-Punkt-Balken des Koppelgetriebes. Als nächstes werden dann die den Balken beschreibenden Strecken $x_{ea}$, $x_{es1}$ und $x_{es2}$, jeweils vom Eingang e ausgehend, eingetragen.

Als Standgetriebeübersetzung wird $i_{oi} = x_{st} - z2 / x_{st} - z1$ definiert. Danach wird für jeden Planetensatz mittels Einsetzen der Strecken $x_{ea}$, $x_{es1}$ und $x_{es2}$ die Standgetriebegleichung aufgestellt. Im Fall des ersten Planetensatzes lautet diese:

$$i_{o1} = x_{es2} - x_{es1} / -x_{es1}$$

Als nächster Schritt werden die aus der Streckentheorie umgeformten Formeln $x_{es1} = x_{ea} / (1-i_{n1})$; $x_{es2} = x_{ea} / (1-i_{n2})$ in die Standgetriebegleichung eingesetzt. Mit Umformen enthält man dann die endgültige Formel: $i_{o1} = (i_{n1} - i_{n2}) / (i-i_{n2})$ . Für $i_{o2}$ wird entsprechend vorgegangen. Durch die Wahl der Nullstellen ergibt sich automatisch, ob für einen Getriebetyp die Standübersetzungen der Koppelgetriebe positiv, negativ oder eine Kombination daraus sind.

Die Figuren 6 bis 10 enthalten eine Übersicht der möglichen Getriebetypen, welche durch Kombination der drei Grundanordnungen U, V und W mit den 36 Kopplungsmöglichkeiten entstehen. Für diese wurde entsprechend den in der Figur 5 beschriebenen Schritten die Standgetriebeübersetzung $i_{o1}$ und $i_{o2}$ ermittelt.

Der Konstrukteur kann aus diesen Zusammenhängen aus der Größe der Nullstellen die Größe der Vorgelege zur Einhaltung der Drehzahl-, Drehmoment- und Leistungskennwerte ermitteln, oder bei Vorgabe der gewünschten Vorgelegeübersetzungen die geeignete Anordnung auswählen.

Die Figur 10 verdeutlicht einen Überblick über den Kraftstoffverbrauch in Abhängigkeit von der Lage der Nullstellen. Daraus wird folgendes ersichtlich:
Auf allen Wegstrecken sinkt der Kraftstoffverbrauch, je geringer die erste Nullstelle der Leistungsteilung ist.

In Richtung der zweiten Nullstelle ist eine Senke in den Diagrammen zu erkennen.

Im Zusammenhang mit der Darstellung in Fig. 1 kann folgendes festgestellt werden:
Der erste Fahrbereich mit der Geraden in der Leistungsteilungskurve von $i_F = 0$; $P_h / P_v = 1$ bis $i_F = i_{n1}$; $P_h / P_v = 0$ stellt den Anfahrbereich des Fahrzeuges dar, bei dem besonders bei kleinen Übersetzungen $i_F$ ein hoher hydraulischer Verlust auftritt. Der Wirkungsgrad beginnt bei $i_F = 0$ mit $\mu = 0$ und steigt dann linear an, bis der theoretische Hydrostatenwirkungsgrad erreicht wird. Da hohe Verluste sich ungünstig auf den Kraftstoffverbrauch auswirken, ist ein möglichst kurzer erster Fahrbereich anzustreben. Je früher in den zweiten Fahrbereich gewechselt wird, desto früher wird das Getriebe im Bereich günstiger Wirkungsgrade betrieben. Außerdem läßt sich durch die Verkürzung des ersten Fahrbereiches eine höhere Vorgelegeübersetzung der Hydrostaten realisieren, was zu einer höheren Zugkraft des Fahrzeuges beim Anfahrvorgang führt. Dadurch steigt die Wirkungsgradlinie steiler an, was sich wiederum positiv auf den Kraftstoffverbrauch sowie das Beschleunigungsvermögen des Fahrzeuges in diesem Bereich auswirkt.

Wird die zweite Nullstelle sehr niedrig gewählt, steigt die Leistungsteilungskurve am Ende des dritten Fahrbereichs auf hohe Werte an. Wegen der schlechten Hydrostatenwirkungsgrade erhöhen sich dadurch auch wiederum die Verluste in diesem Fahrbereich, was sich ungünstig auf den Kraftstoffverbrauch auswirkt.

Wird die zweite Nullstelle sehr hoch gewählt, so steigt die Leistungsteilung im häufig benutzten zweiten Fahrbereich an. Der dritte Fahrbereich wird trotz sinkender Leistungsteilung weniger benutzt. Aufgrund dessen wird der Kraftstoffverbrauch ungünstig hoch. In den Senken der Diagramme ist dabei das Verhältnis der Leistungsteilungen im zweiten und dritten Fahrbereich optimal.

## Patentansprüche

1. Verfahren zur Auslegung eines Leistungsverzweigungsgetriebes, insbesondere eines stufenlosen hydrostatisch-mechanischen Leistungsverzweigungsgetriebes mit wenigstens zwei Fahrbereichen, umfassend

   - einen ersten mechanischen Getriebeteil, der wenigstens ein vierwelliges Planetenradgetriebe, welches zwei miteinander gekoppelte dreiwellige Planetenradsätze umfaßt;

- einen zweiten, hydrostatischen Getriebeteil, der zwei energetisch miteinander gekoppelte, als Pumpe oder Motor betreibbare Hydroeinheiten umfaßt, die mit dem mechanischen Teil gekoppelt sind;

gekennzeichnet durch folgende Merkmale:

1.1 bei welchem als wesentliches Kriterium die Lage wenigstens einer vorhandenen Nullstellen der Kennlinie "hydraulisch übertragbare Leistung im Verhältnis zur Gesamtleistung / Getriebegesamtübersetzung $i_F$" angesehen wird;

1.2 bei welchem durch Vorgabe der geeigneten Nullstellen die Standgetriebeübersetzungen der einzelnen Planetenradsätze ermittelt werden.

**2.** Verfahren nach Anspruch 1, dadurch gekennzeichnet, daß bei drei vorgesehenen Fahrbereichen die Nullstellen der Kennlinie "hydraulisch übertragbare Leistung im Verhältnis zur Gesamtleistung / Gesamtgetriebeübersetzung" wie folgt festgelegt sind:

- eine erste Nullstelle im Bereich von 0,3 bis 0,4 und
- eine zweite Nullstelle im Bereich von etwa 0,9 bis 1,2.

Fig.1a

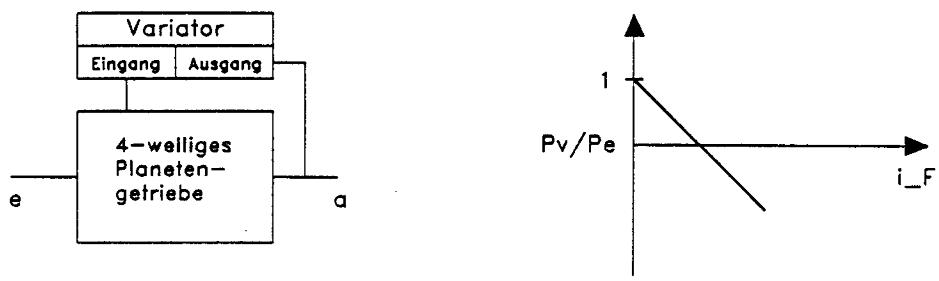


Fig.1b

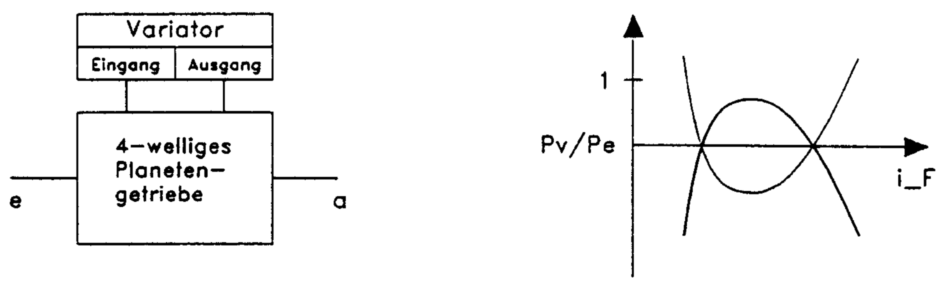


Fig.1c

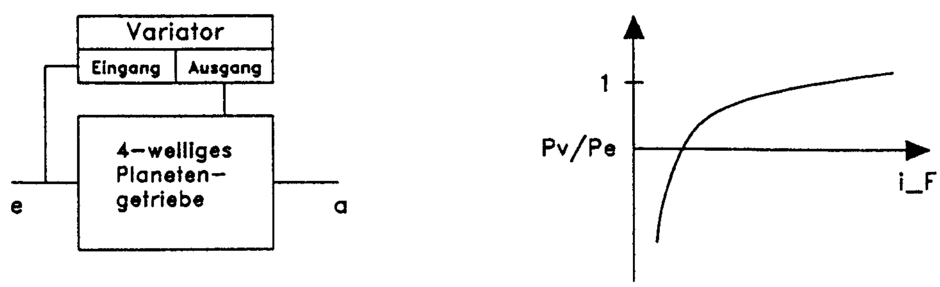

Fig. 2

Grundanordnungen von Variator und Planetensatz

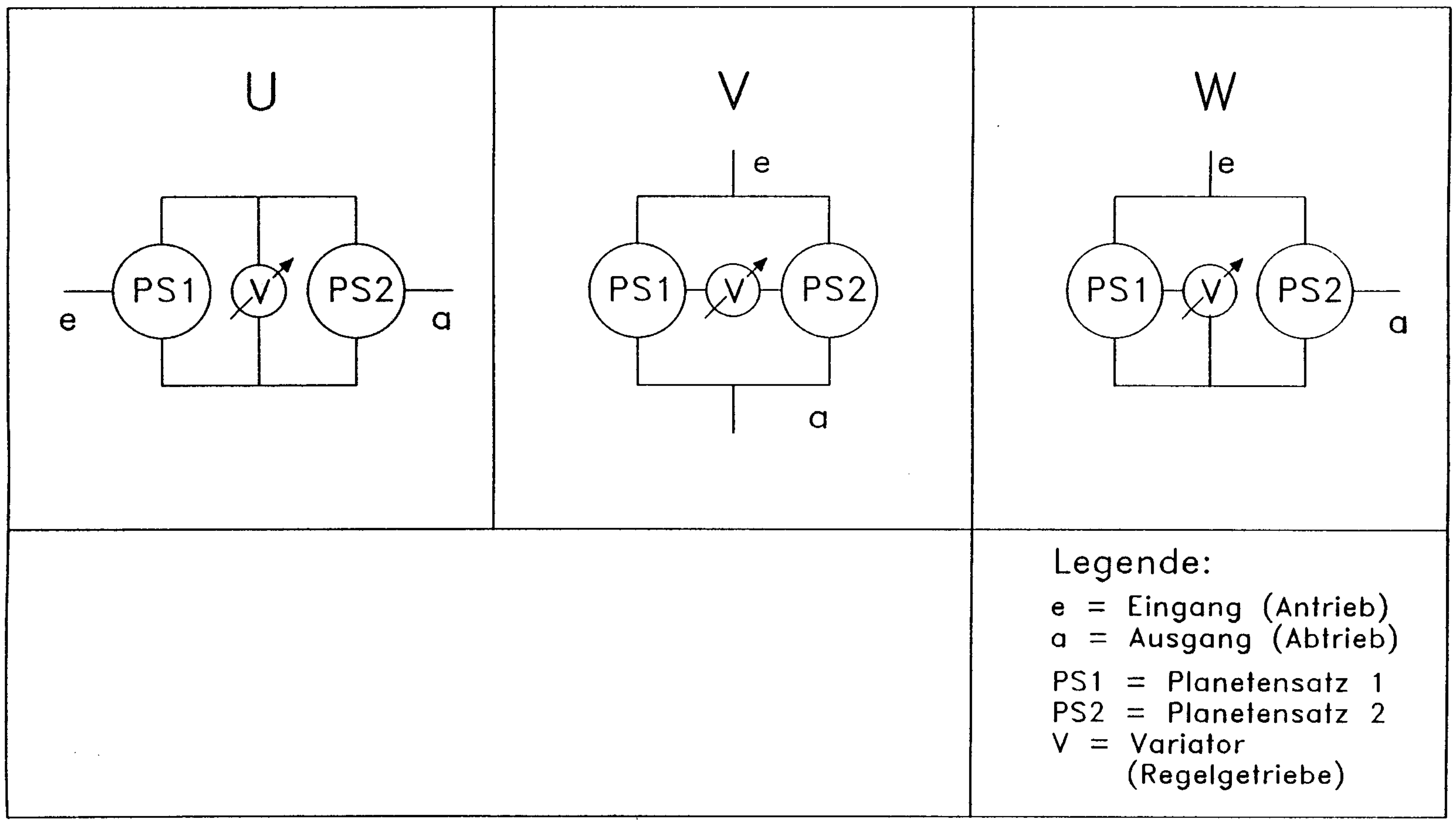

Fig. 3a

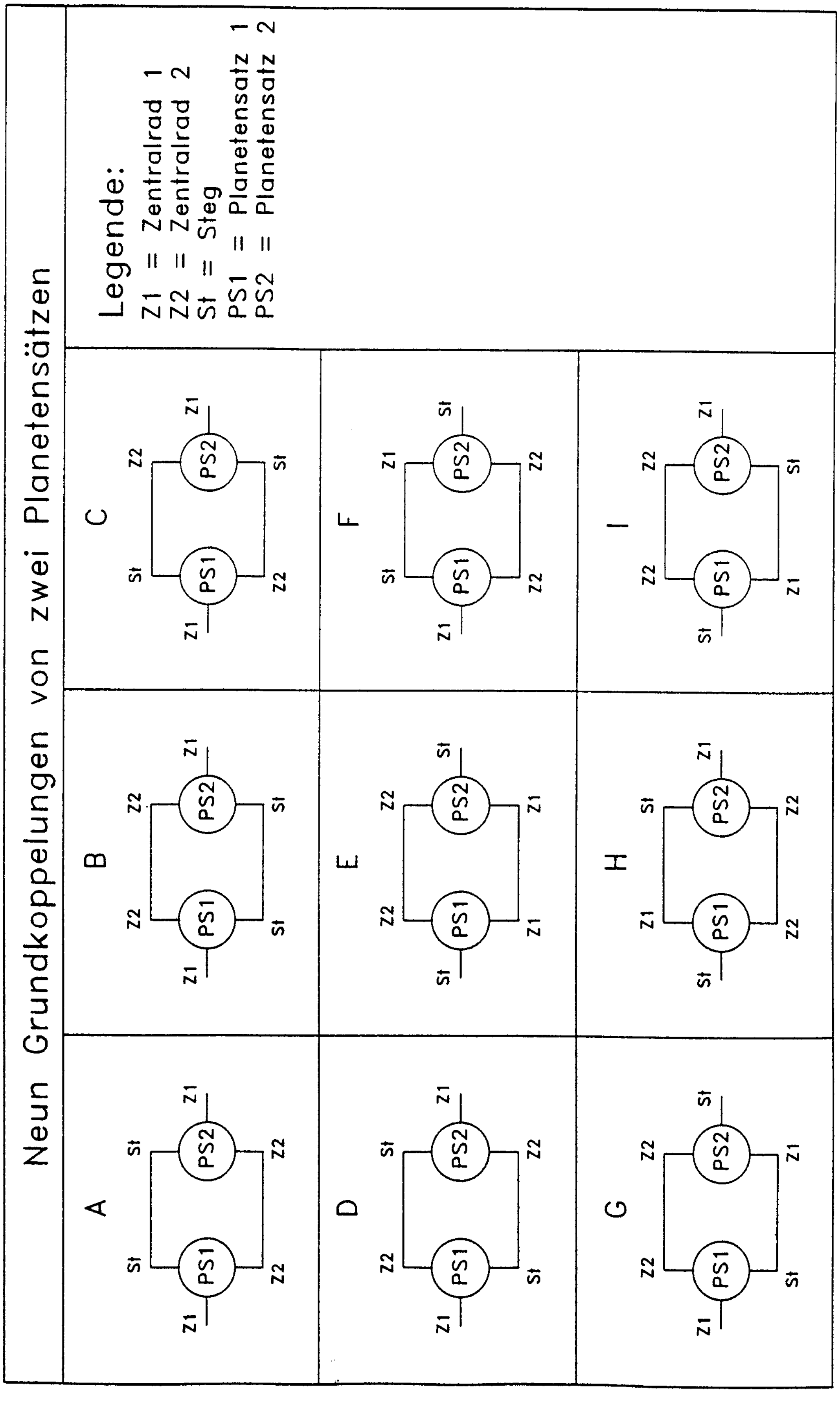
Neun Grundkoppelungen von zwei Planetensätzen
A
B
C
D
E
F
G
H
I
Legende:
Z1 = Zentralrad 1
Z2 = Zentralrad 2
St = Steg
PS1 = Planetensatz 1
PS2 = Planetensatz 2

Fig. 3b

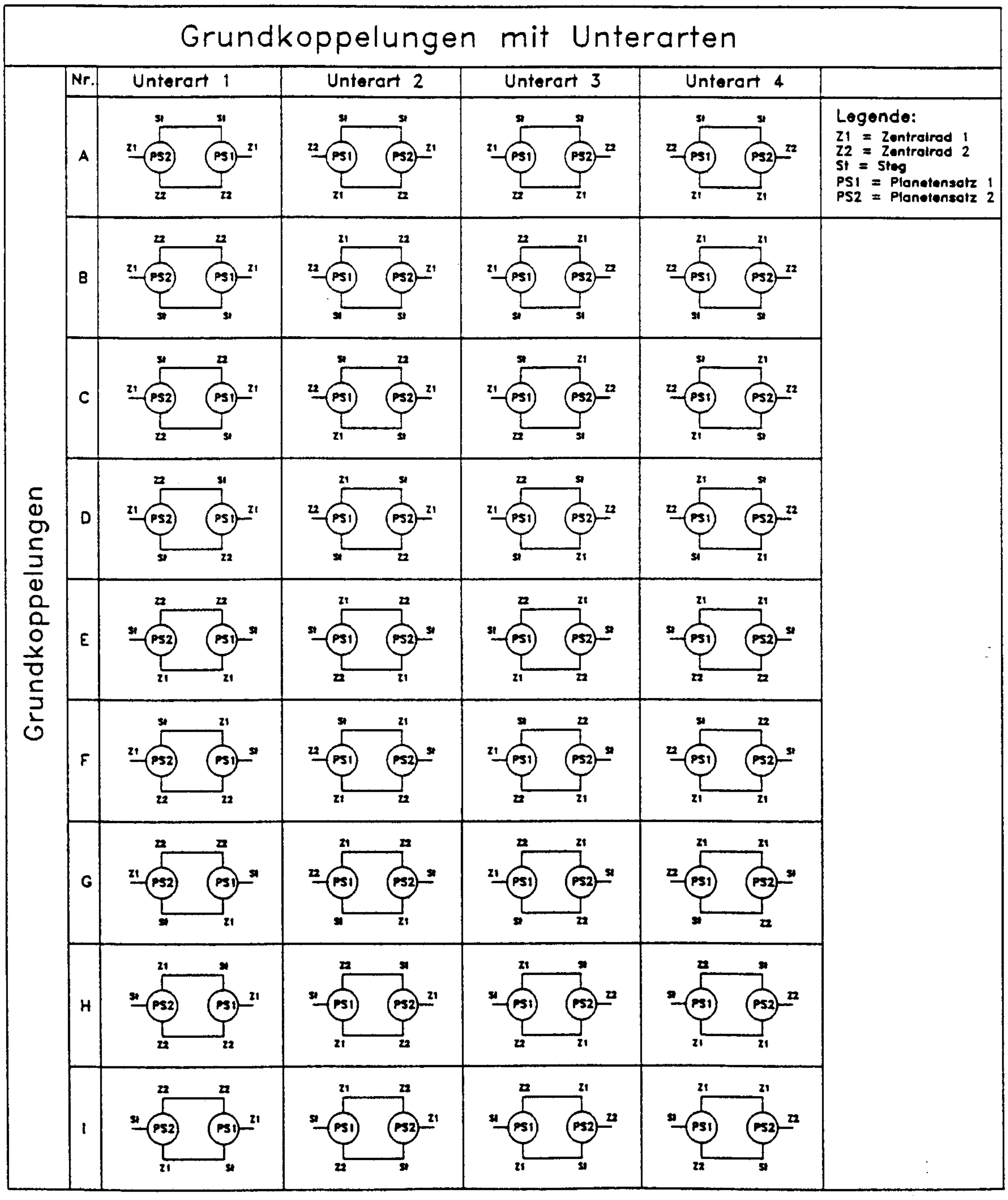
Grundkoppelungen mit Unterarten
Grundkoppelungen
Nr.
Unterart 1
Unterart 2
Unterart 3
Unterart 4
A
B
C
D
E
F
G
H
I
Legende:
Z1 = Zentralrad 1
Z2 = Zentralrad 2
St = Steg
PS1 = Planetensatz 1
PS2 = Planetensatz 2

Fig. 4a

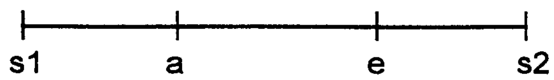


Legende:

e Eingang (Antrieb)
a Ausgang (Abtrieb)
s1 Stützstelle 1
s2 Stützstelle 2

Fig. 4b

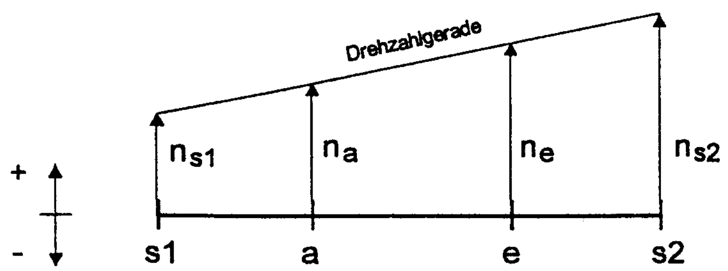


Legende:

e Eingang (Antrieb)
a Ausgang (Abtrieb)
s1 Stützstelle 1
s2 Stützstelle 2
n Drehzahl

# Fig. 5

## Herleitung der io-Formeln am Beispiel des Getriebetyps UA

| UA | io-Formeln |
|---|---|
| 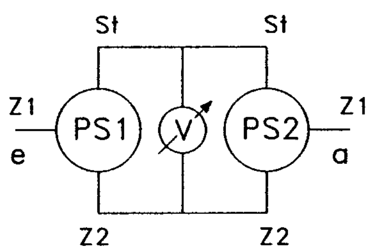  | $io1 = \frac{iN1 - iN2}{1 - iN2}$<br>$io2 = \frac{iN1 - iN2}{iN1(1 - iN2)}$ |

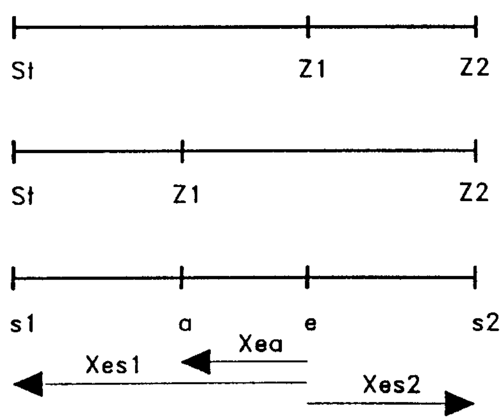


Planetensatz 1 = Balken 1

Planetensatz 2 = Balken 2

resultierender 4-Punkt-Balken

Legende:

Z1 = Zentralrad 1
Z2 = Zentralrad 2
St = Steg
PS1 = Planetensatz 1
PS2 = Planetensatz 2
V = Variator (Regelgetriebe)
e = Eingang
a = Ausgang
s1 = Stützstelle 1 (Variator-Anschluß)
s2 = Stützstelle 2 (Variator-Anschluß)
Xin = Balkenstrecken

c:\win_prog\wsketch\koppel10

Fig. 6

## Getriebetypen UA bis UI und VA bis VD

| UA | io–Formeln |
|---|---|
| 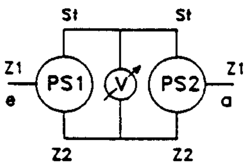 | $io1 = \frac{iN1 - iN2}{1 - iN2}$<br>$io2 = \frac{iN1 - iN2}{iN1(1 - iN2)}$ |

| UC | io–Formeln |
|---|---|
| 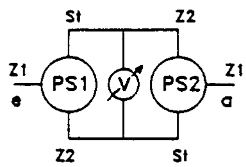 | $io1 = \frac{iN1 - iN2}{1 - iN2}$<br>$io2 = \frac{iN2 - iN1}{iN2(1 - iN1)}$ |

| UE | io–Formeln |
|---|---|
| 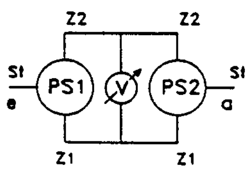 | $io1 = \frac{1 - iN1}{1 - iN2}$<br>$io2 = \frac{iN2(1 - iN1)}{iN1(1 - iN2)}$ |

| UF | io–Formeln |
|---|---|
| 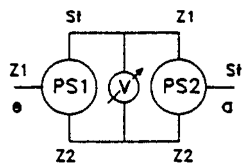 | $io1 = \frac{iN1 - iN2}{1 - iN2}$<br>$io2 = \frac{iN2(1 - iN1)}{iN1(1 - iN2)}$ |

| UH | io–Formeln |
|---|---|
| 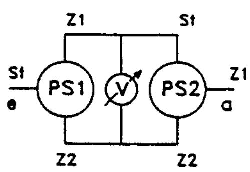 | $io1 = \frac{1 - iN1}{1 - iN2}$<br>$io2 = \frac{iN2 - iN1}{iN1(iN2-1)}$ |

Legende:
Z1 = Zentralrad 1
Z2 = Zentralrad 2
St = Steg
PS1 = Planetensatz 1
PS2 = Planetensatz 2
V = Variator (Regelgetriebe)

| VA | io–Formeln |
|---|---|
| 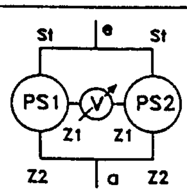 | $io1 = 1 - iN2$<br>$io2 = 1 - iN1$ |

| VB | io–Formeln |
|---|---|
| 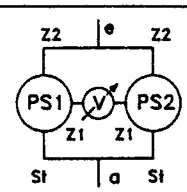 | $io1 = \frac{iN2 - 1}{iN2}$<br>$io2 = \frac{iN1 - 1}{iN1}$ |

| VC | io–Formeln |
|---|---|
| 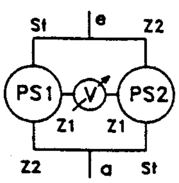 | $io1 = 1 - iN1$<br>$io2 = \frac{iN2 - 1}{iN2}$ |

| VD | io–Formeln |
|---|---|
| 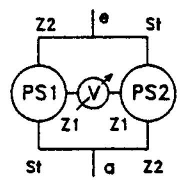 | $io1 = \frac{iN1 - 1}{iN1}$<br>$io2 = 1 - iN2$ |

Fig. 7

Getriebetypen VE bis VI und WA bis WA2_2

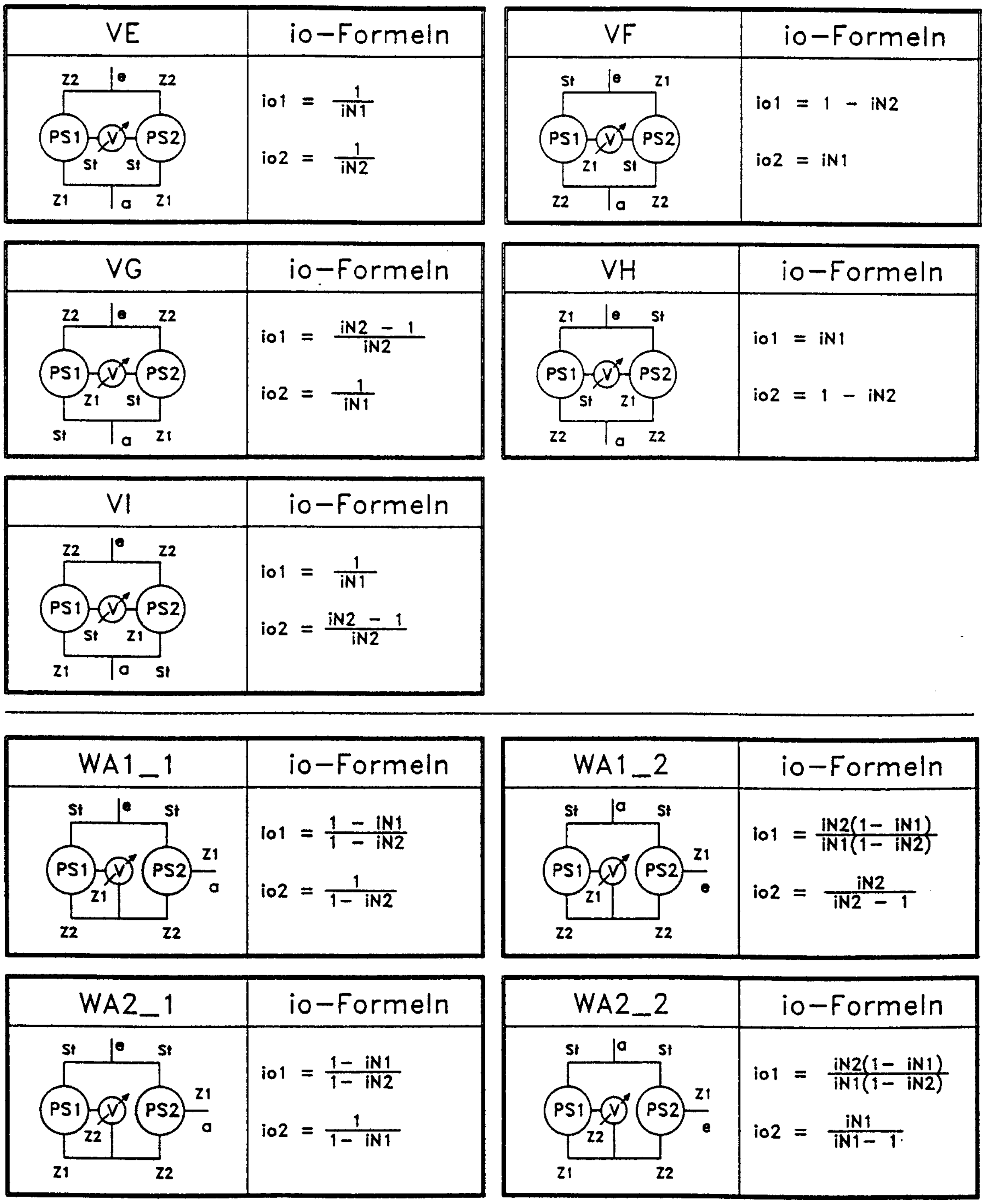

Fig. 8

Getriebetypen WB1_1 bis WE1_2

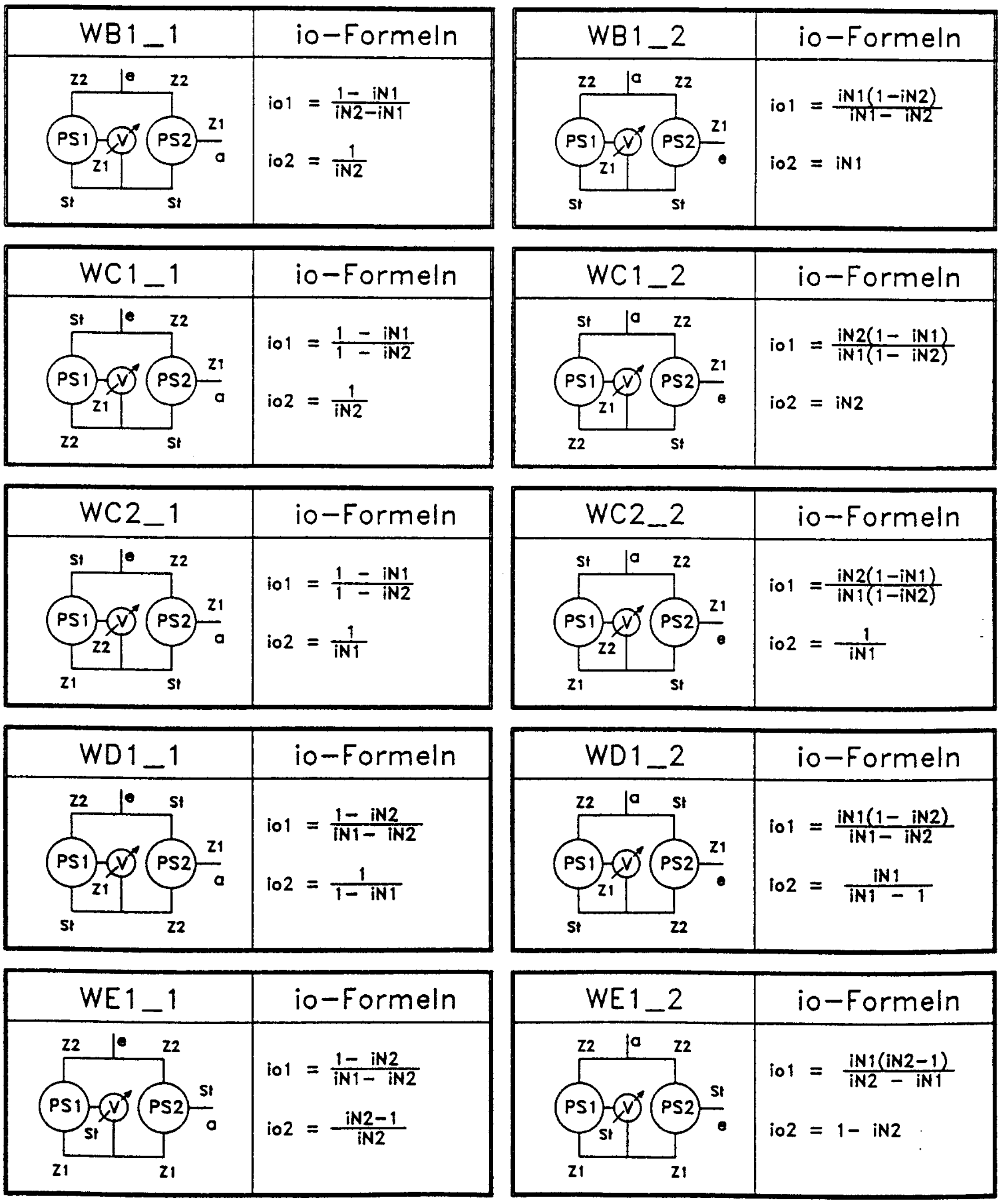

Fig. 9

Getriebetypen WF1_1 bis WI1_2

| WF1_1 | io-Formeln | WF1_2 | io-Formeln |
|---|---|---|---|
| 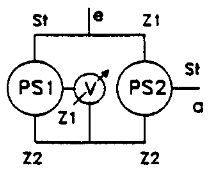 | $io1 = \frac{1 - iN1}{1 - iN2}$<br>$io2 = \frac{iN2}{iN2 - 1}$ | 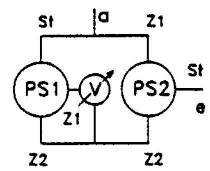 | $io1 = \frac{iN2(1 - iN1)}{iN1(1 - iN2)}$<br>$io2 = \frac{1}{1 - iN2}$ |
| **WF2_1** | **io-Formeln** | **WF2_2** | **io-Formeln** |
| 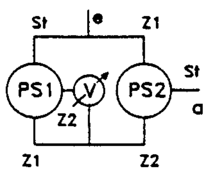 | $io1 = \frac{1 - iN1}{1 - iN2}$<br>$io2 = \frac{iN1}{1 - iN1}$ | 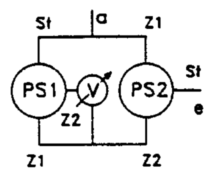 | $io1 = \frac{iN2(1 - iN1)}{iN1(1 - iN2)}$<br>$io2 = \frac{1}{1 - iN1}$ |
| **WG1_1** | **io-Formeln** | **WG1_2** | **io-Formeln** |
| 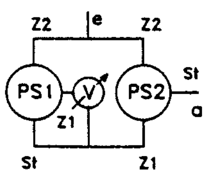 | $io1 = \frac{1 - iN2}{iN1 - iN2}$<br>$io2 = \frac{iN1 - 1}{iN1}$ | 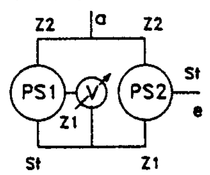 | $io1 = \frac{iN1(iN2 - 1)}{iN2 - iN1}$<br>$io2 = 1 - iN1$ |
| **WH1_1** | **io-Formeln** | **WH1_2** | **io-Formeln** |
| 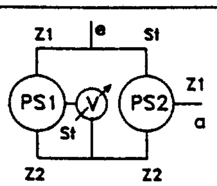 | $io1 = \frac{iN1 - iN2}{1 - iN2}$<br>$io2 = \frac{1}{1 - iN2}$ | 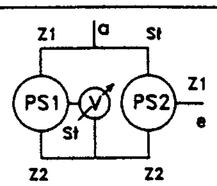 | $io1 = \frac{iN2 - iN1}{iN1(iN2 - 1)}$<br>$io2 = \frac{iN2}{iN2 - 1}$ |
| **WI1_1** | **io-Formeln** | **WI1_2** | **io-Formeln** |
| 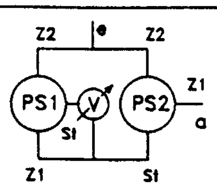 | $io1 = \frac{1 - iN2}{iN1 - iN2}$<br>$io2 = \frac{1}{iN2}$ | 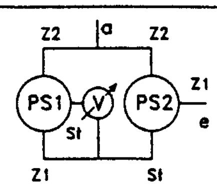 | $io1 = \frac{iN1(iN2 - 1)}{iN2 - iN1}$<br>$io2 = iN2$ |

Fig. 10

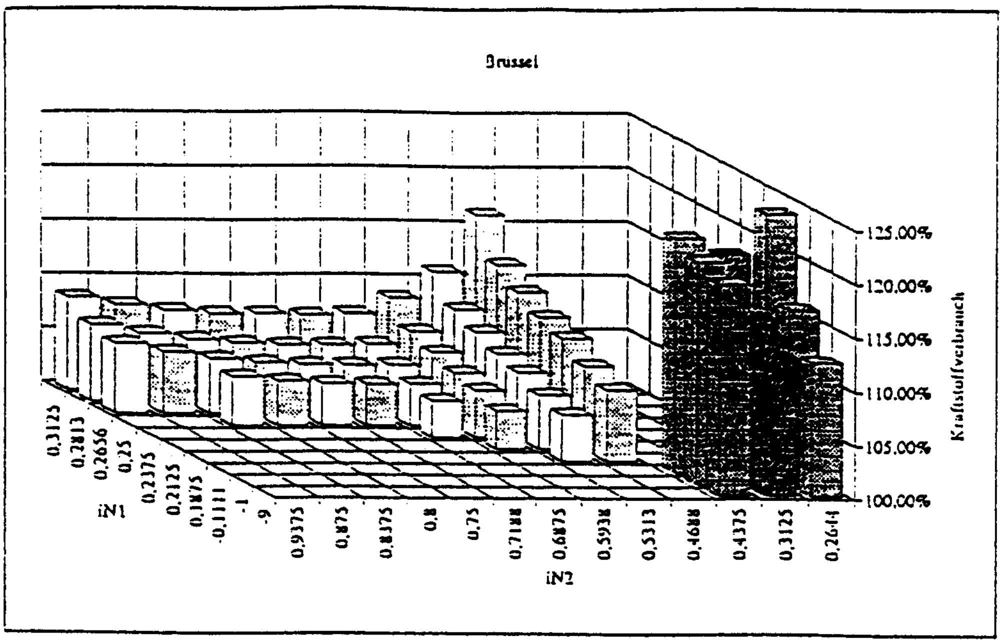
Brussel
125,00%
120,00%
115,00%
110,00%
105,00%
100,00%
Kraftstoffverbrauch
0,3125
0,2813
0,2656
0,25
0,2375
0,2125
0,1875
-0,1111
-1
-9
iN1
0,9375
0,875
0,8375
0,8
0,75
0,7188
0,6875
0,5938
0,5313
0,4688
0,4375
0,3125
0,2644
iN2

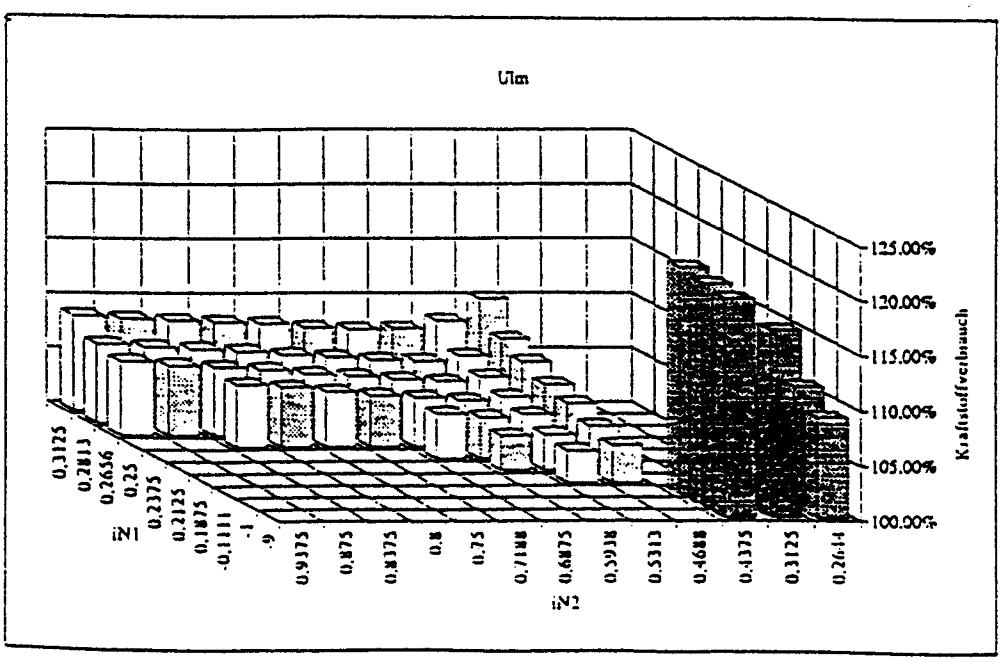
Ulm
125,00%
120,00%
115,00%
110,00%
105,00%
100,00%
Kraftstoffverbrauch
0,3125
0,2813
0,2656
0,25
0,2375
0,2125
0,1875
-0,1111
-1
-9
iN1
0,9375
0,875
0,8375
0,8
0,75
0,7188
0,6875
0,5938
0,5313
0,4688
0,4375
0,3125
0,2644
iN2